# EUROPÄISCHE PATENTSCHRIFT

(11) **EP 1 398 198 B1**
(45) Veröffentlichungstag und Bekanntmachung des Hinweises auf die Patenterteilung: **29.02.2012**
(21) Anmeldenummer: 03014907.4
(22) Anmeldetag: 01.07.2003
(51) Int. Cl.: B60K 11/04, B60K 11/08

(54) **Kraftfahrzeug mit zumindest einem Kühler**
Automotive vehicle with at least one radiator
Véhicule automobile avec au moins un radiateur

(30) Priorität: 14.09.2002 DE 10242788
(43) Veröffentlichungstag der Anmeldung: 17.03.2004
(73) Patentinhaber: Dr. Ing. h.c. F. Porsche AG, 70435 Stuttgart (DE)
(72) Erfinder: Danev, Dimitar, 71272 Renningen (DE); Schmid, Markus, 71297 Mönsheim (DE)

(56) Entgegenhaltungen:
- EP-A- 0 567 411
- DE-A1- 19 831 256
- FR-A- 2 778 975
- GB-A- 2 117 721
- US-A- 4 706 615
- US-A- 5 219 016
- US-A- 5 551 505
- US-A- 5 597 047

## Beschreibung

Die Erfindung betrifft ein Kraftfahrzeug mit zumindest einem Kühler, dem ein erster Luftführungskanal mit einer Kühllufteintrittsöffnung vorgelagert und ein zweiter Luftführungskanal mit einer Kühlluftausströmöffnung nachgeschaltet ist, gem. dem Oberbegriff des Anspruchs 1.

Bei einer bekannten Anordnung der eingangs genannten Gattung (EP 0 213 387 A2) ist im Bugbereich des Kraftfahrzeuges ein Kühler angeordnet, der einen vorgelagerten ersten Luftführungskanal und einen nachgeschalteten zweiten Luftführungskanal aufweist. An einem bugseitigen Endbereich ist eine Kühllufteintrittsöffnung vorgesehen und der zweite Luftführungskanal weist eine der Fahrbahn zugekehrte Kühlluftausströmöffnung auf.

Der Kühler und beide Luftführungskanäle werden bei dieser Anordnung durch separate Bauteile gebildet, die jeweils für sich am angrenzenden Aufbau mittels Befestigungselementen in Lage gehalten sind. Eine derartige Anordnung weist einen relativ aufwendigen Aufbau auf und es sind eine Vielzahl von Befestigungselementen erforderlich.

Der nächstliegende bekanntgewordene Stand der Technik ist der GB A 2 117 721 zu entnehmen.

Die GB-A-2 117 721 offenbart ein Kraftfahrzeug mit zumindest einem Kühler, dem ein erster Luftführungskanal mit einer Kühllufteintrittsöffnung vorgelagert und ein zweiter Luftführungskanal mit einer Kühlluftausströmöffnung nachgeschaltet ist, wobei der zumindest eine Kühler von einem am angrenzenden Aufbau befestigten Tragrahmen aufgenommen ist und dass einstückig mit dem Tragrahmen ein Luftleitelement ausgebildet ist, das zusammen mit dem Kühler zumindest einen der beiden Luftührungskanäle bildet.

Der Tragrahmen wird bei dieser Anordnung durch die Bugschürze und durch eine obere Luftleitwand gebildet, wobei sich die Luftleitwand zwischen den Motorlängsträgern nach hinten und nach unten erstreckt und die Kühler-Abluft vom Verbrennungsmotor fernhält und unter die Karosserie ableitet. Dieser Tragrahmen ist an den Motorlängsträgern und an den vorderen Kotflügeln befestigt.

Aufgabe der Erfindung ist es, an einer mit Luftführungskanälen versehen Kühleranordnung solche Vorkehrungen zu treffen, daß der Montageaufwand und die Befestigungsmittel reduziert werden.

Erfindungsgemäß wird diese Aufgabe durch die Merkmale des Anspruchs 1 gelöst. Weitere die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung eines zweiteiligen Tragrahmens zur Aufnahme des Kühlers eine schnelle und einfache Montage des Kühlers am Aufbau erzielt wird. Durch die Integration eines Durch Anordnung von nicht näher dargestellten Zwischenstücken zwischen Oberteil 17 und Unterteil 18 des Tragrahmens 12 lassen sich Kühler 9 unterschiedlicher Bauhöhe im Tragrahmen 12 aufnehmen.

Luftleitelementes in den Tragrahmen entfallen Befestigungselemte für den abluftseitigen Luftführungskanal und zugleich wird der Tragrahmen durch das Luftleitelement wirkungsvoll versteift. Durch die Anordnung von Zwischenstücken zwischen Oberteil und Unterteil des Tragrahmens lassen sich Kühler unterschiedlicher Bauhöhe im Tragrahmen aufnehmen. Durch das Luftleitelement erfolgt zudem eine Wärmeabdichtung zur angrenzenden Kofferraummulde hin.

Ein Ausführungsbeispiel der Erfindung wird im folgenden näher erläutert.
Es zeigen
- Fig. 1: eine Ansicht von vorne auf den Bugbereich eines Personenkraftwagens,
- Fig. 2: einen Schnitt nach der Linie II-II der Fig. 1,
- Fig. 3: eine perspektivische Ansicht von vorne auf den Tragrahmen für den Kühler,
- Fig. 4: eine perspektivische Ansicht von hinten auf das Oberteil des Tragrahmens,

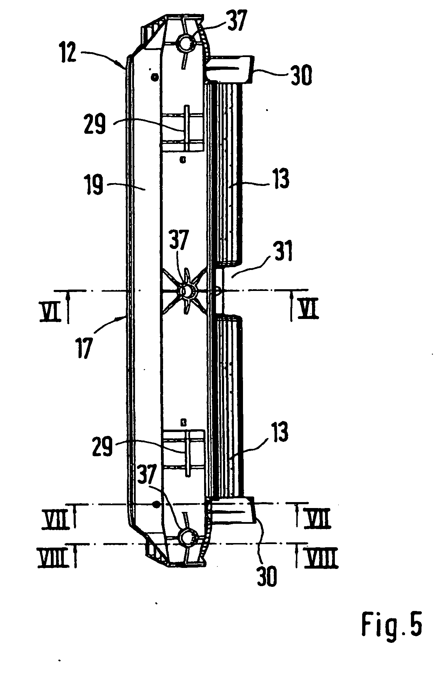

- Fig. 5: eine Draufsicht auf den Tragrahmen,
- Fig. 6: einen Schnitt nach der Linie VI-VI der Fig. 5, in größerer Darstellung,
- Fig. 7: einen Schnitt nach der Linie Vll-Vll der Fig. 5, in größerer Darstellung und
- Fig. 8: einen Schnitt nach der Linie Vlll-Vlll der Fig. 5, in größerer Darstellung.

Ein durch einen Personenkraftwagen 1 gebildetes Kraftfahrzeug umfaßt einen feststehenden Aufbau 2, der im dargestellten Bugbereich 3 eine vordere Haube 4, seitliche Kotflügel 5, Leuchteneinheiten 6 und ein vorderes Verkleidungsteil 7 mit einer querverlaufenden Kühllufteintrittsöffnung 8 aufweist.

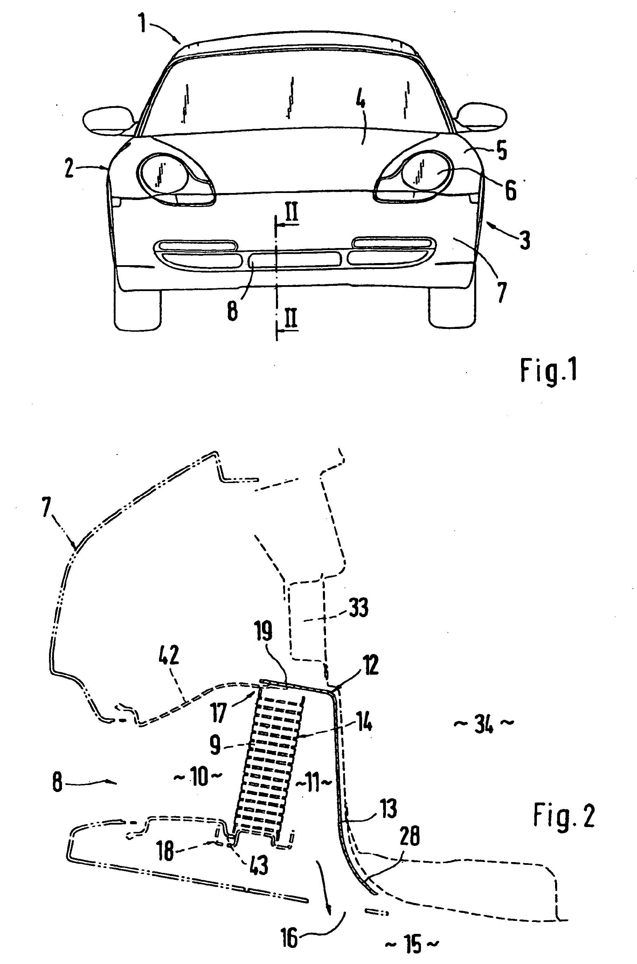

Das großflächige elastische Verkleidungsteil 7 ist einem nicht näher dargestellten formsteifen Träger eines Stoßfängers vorgelagert und in herkömmlicher Weise durch Schrauben, Klipsen oder dgl. am angrenzenden Aufbau 2 in Lage gehalten. In einem untenliegenden, in Querrichtung gesehen mittleren Bereich des Verkleidungsteiles 7 ist benachbart der Kühllufteintrittsöffnung 8 zumindest ein Kühler 9 angeordnet, wobei zur Führung des den Kühler 9 beaufschlagenden Kühlluftstromes vor dem Kühler 9 ein erster Luftführungskanal 10 und hinter dem Kühler 9 ein zweiter Luftführungskanal 11 vorgesehen sind (Fig. 2).

Der zumindest eine Kühler 9 ist von einem Tragrahmen 12 aufgenommen, der mittels lösbarer Befestigungselemente (z.B. Schrauben) am angrenzenden Aufbau 2 in Lage gehalten ist. Der Kühler wird von vorne in Pfeilrichtung R gesehen in den Tragrahmen 12 eingesetzt. Erfindungsgemäß ist einstückig mit dem Tragrahmen 12 ein Luftleitelement 13 ausgebildet, das zusammen mit dem Kühler 9 zumindest einen der beiden Luftführungskanäle 10, 11 bildet.

Im Ausführungsbeispiel bildet das mit dem Tragrahmen 12 verbundene Luftleitelement 13 zusammen mit der Rückseite 14 des Kühlers 9 den nachgeschalteten zweiten Luftführungskanal 11, der auf der einer Fahrbahn 15 zugekehrten Seite eine Kühlluftausströmöffnung 16 aufweist.

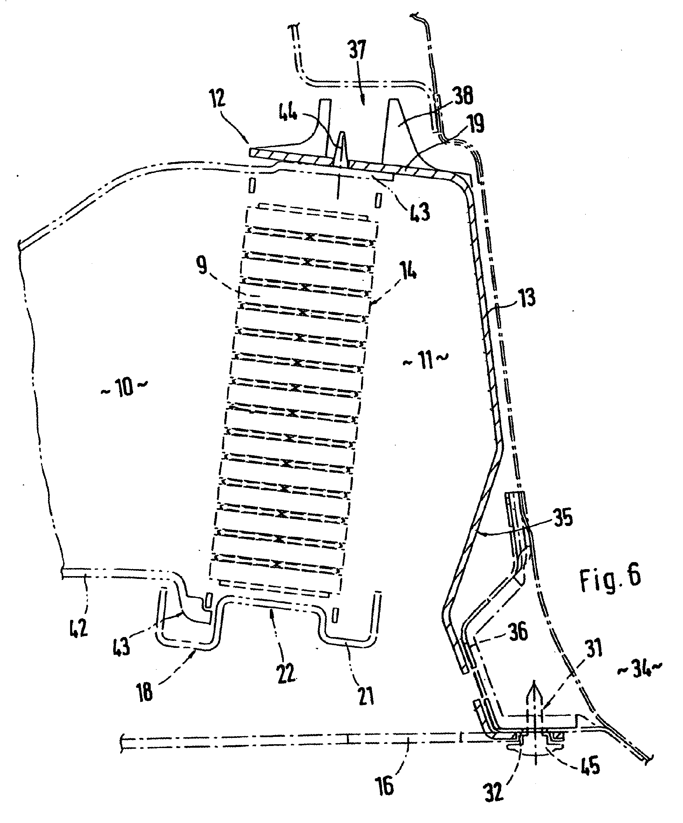

Der Tragrahmen 12 setzt sich aus einem rahmenförmigen Oberteil 17 und einem schienenförmig profilierten querverlaufenden Unterteil 18 zusammen. Das Luftleitelement 13 ist einstückig mit dem Oberteil 17 des Tragrahmens 12 ausgebildet, dergestalt, daß das querverlaufende Luftleitelement 13 an beide außenliegenden Seitenwangen 20 und an den oberen Querträger 19 angeschlossen ist. Das rahmenförmige Oberteil 17 ist aus einem Leichtmetalldruckguß oder einem geeigneten Kunststoff wie PP GF30, PA 6.6 oder dergleichen hergestellt. Das profilierte schienenförmige Unterteil 18 des Tragrahmens 12 besteht aus Stahlblech oder Aluminiumblech. Das Unterteil 18 weist eine etwa U-förmige nach oben hin offene Querschnittsform auf, wobei in einem wesentlichen Teilbereich der Quererstreckung des Mittelstückes 21 eine nach unten hin offene U-förmige Sicke 22 vorgesehen ist (Fig. 6).

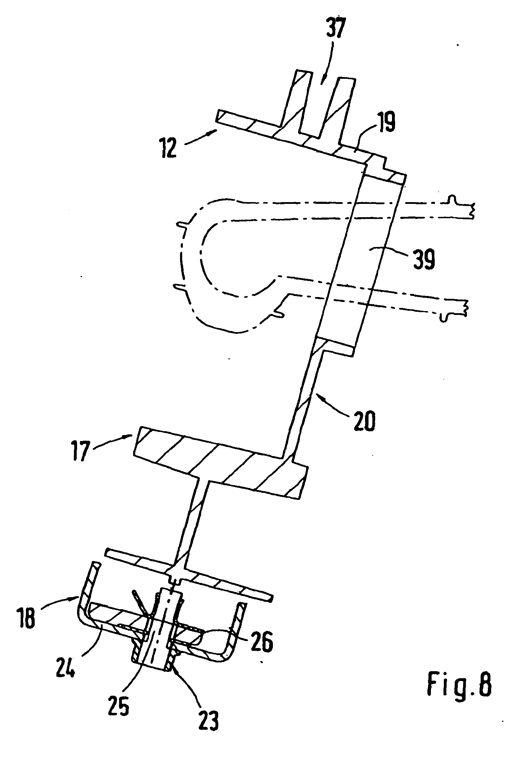

Das rahmenförmige Oberteil 17 ist auf das Unterteil 18 des Tragrahmens 12 aufgesetzt und durch im unteren Bereich der Seitenwangen 20 angeordnete schraubbare Befestigungselemente 23 miteinander verbunden (Fig. 8).

Die Seitenwangen 20 weisen an ihren unteren Endbereichen Anlageflächen 24 mit jeweils einer Durchgangsbohrung 25 auf, wobei benachbart Durchgangsbohrung 25 eine Mutter 26 bzw. eine Halteklammer mit einer Mutter angeordnet ist. Die schraubbaren Befestigungselemente 23 werden von unten her durch Öffnungen des Unterteils 18 hindurchgeführt und in die Mutter 26 des Oberteils 17 eingedreht (Fig. 8).

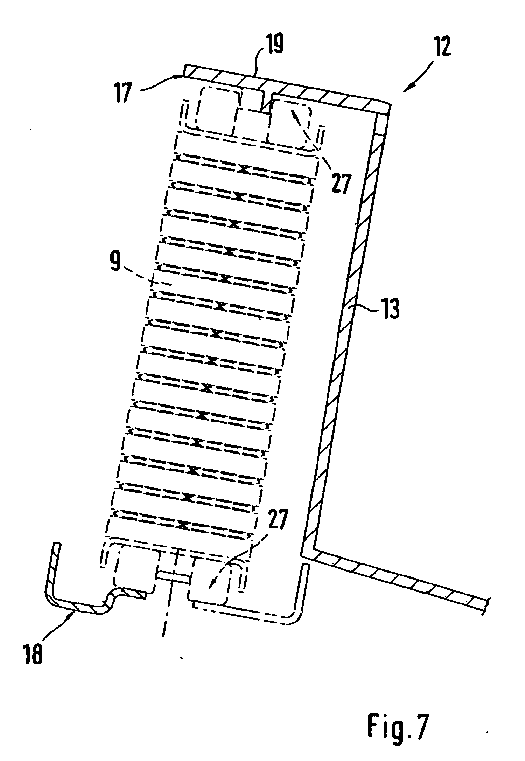

Der Kühler 9 ist schwimmend im Tragrahmen 12 aufgenommen (Fig. 7). Hierzu sind an der Unterseite und an der Oberseite des Kühlers 9 jeweils zwei elastische Elemente 27 vorgesehen, die sich zwischen Kühler 9 und Tragrahmen 12 erstrecken. Die elastischen Elemente 27 sind sowohl am Kühler 9 als auch am Tragrahmen 12 Lage über nicht näher dargestellte Mittel in ihrer Lage fixiert.

Das Luftleitelement 13 versteift einerseits den Tragrahmen 12 und bildet andererseits zusammen mit dem Kühler 9 den zweiten Luftführungskanal 11. Das querverlaufende Luftleitelement 13 ist gemäß Fig. 2 weiter nach unten gezogen als das Unterteil 18 des Tragrahmens 12 und es weist einen nach hinten gebogenen unteren Endbereich 28 auf, der benachbart der bodenseitigen Luftausströmöffnung 16 endet.

An der Oberseite des Querträgers 19, im Bereich beider Seitenwangen 20 sowie in einem unteren mittleren Bereich des Luftleitelements 13 sind Befestigungslaschen 29, 30, 31 ausgebildet, wobei jede dieser Befestigungslaschen 29, 30, 31 eine Durchgangsöffnung 32 für eine hindurchzuführende Befestigungsschraube 45 aufweist.

Die beiden beabstandet angeordneten Befestigungslaschen 29 sind an der Oberseite des Querträgers 19 ausgebildet und stützen sich in ihrer Montagestellung an der Außenseite eines aufbauseitigen Trägers 33 ab. Die beiden im Bereiche der Seitenwangen 20 vorgesehene Befestigungslaschen 30 verlaufen beiderseits des Luftführungskanals 11 und werden an der angrenzenden, dahinterliegenden Kofferraummulde 34 fixiert.

Die mittlere Befestigungslasche 31 wird durch eine sickenartige Einprägung 35 in einem unteren Bereich des Luftleitelements 13 gebildet, die sich an einem Aufsatzteil 36 der Kofferraummulde 34 abstützt. lm Ausführungsbeispiel sind an der Oberseite des Querträgers 19 zur Aussteifung örtlich angeformte hohlzylindrische Dome 37 vorgesehen, die zusätzlich über äußere radial verlaufende Stützrippen 38 an den Querträger 19 angeschlossen sind. lm Bereich beider Seitenwangen 20 sind örtlich kreisförmige Aufnahmen 39 zum Hindurchführen von nicht näher dargestellten kühlerseitigen Anschlußstutzen ausgebildet.

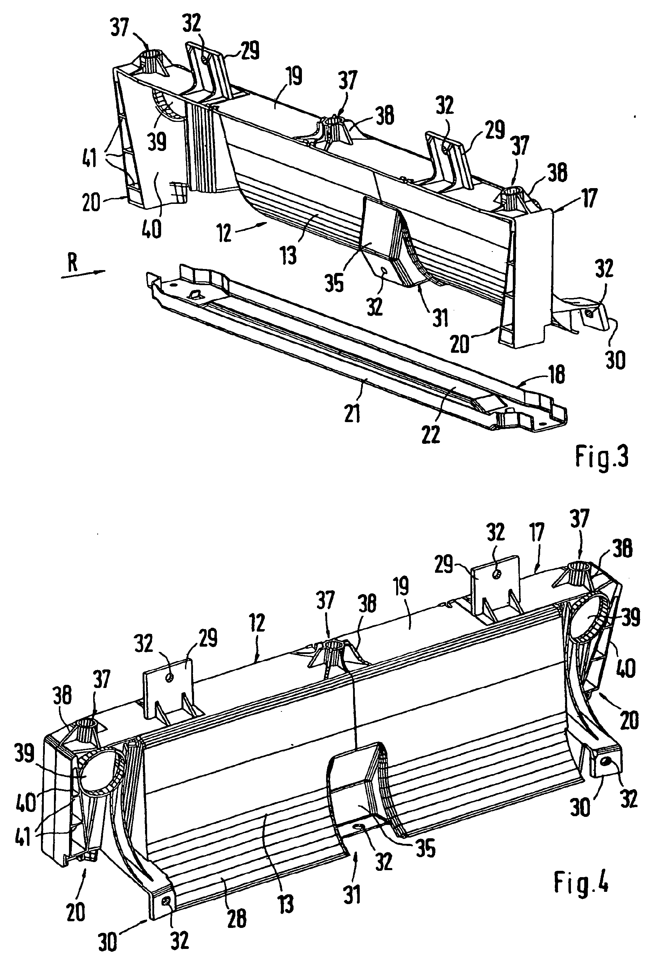

Beide Seitenwangen 20 weisen an ihren Außenseiten etwa dreieckförmig ausgebildete Stützabschnitte 40 auf, die durch übereinanderliegend angeordnete Stege 41 versteift sind (Fig. 3).

Der vorgelagerte Luftführungskanal 10 wird im Ausführungsbeispiel durch ein separat hergestelltes geschlossenes Luftführungsgehäuse 42 aus Kunststoff gebildet, das vorne an die Kühllufteintrittsöffnung 8 des Verkleidungsteiles 7 angeschlossen ist. Der hintere abgestellte Rand 43 des Luftführungsgehäuses 42 ist abschnittsweise in das profilierte Unterteil 18 und das Oberteil 17 des Tragrahmens 12 eingesteckt und wird beispielsweise über Haltezapfen 44 fixiert (s. Fig. 6).

Durch Anordnung von nicht näher dargestellten Zwischenstücken zwischen Oberteil 17 und Unterteil 18 des Tragrahmens 12 lassen sich Kühler 9 unterschiedlicher Bauhöhe im Tragrahmen 12 aufnehmen.

## Patentansprüche

1. Kraftfahrzeug mit zumindest einem Kühler (9), dem ein erster Luftführungskanal (10) mit einer Kühllufteintrittsöffnung vorgelagert und ein zweiter Luftführungskanal (11) mit einer Kühlluftausströmöffnung nachgeschaltet ist, wobei der zumindest eine Kühler (9) von einem am angrenzenden Aufbau (2) befestigten Tragrahmen (12) aufgenommen ist, wobei einstückig mit dem Tragrahmen (12) ein Luftleitelement (13) ausgebildet ist, das zusammen mit dem Kühler (9) zumindest einen der beiden Luftführungskanäle (10, 11) bildet, **dadurch gekennzeichnet,**
- **dass** sich der Tragrahmen (12) aus einem rahmenförmigen Oberteil (17) und einem schienenförmig profilierten querverlaufenden Unterteil (18) zusammensetzt,
- **dass** das Oberteil (18) aus einem oberen Querträger (19) und zwei aufrechten, nach unten ragenden Seitenwagen (20) besteht,
- **dass** das Luftleitelement (13) einstückig mit dem Oberteil (17) des Tragrahmens (12) ausgebildet ist, dergestalt, dass das querverlaufende Luftleitelement (13) an beide außenliegenden Seitenwangen (20) und an den rückwärtigen Rand des oberen Querträgers (19) angeschlossen ist,
- **dass** am Oberteil (17) Befestigungslaschen (29, 30, 31) zur aufbauseitigen Halterung des Tragrahmens (12) an einem querverlaufenden Träger (33) und an der angrenzenden dahinterliegenden Kofferraummulde (34) ausgebildet sind,
- **dass** das rahmenförmige Oberteil (17) auf das Unterteil (18) des Tragrahmens (12) aufgesetzt und durch im unteren Bereich der Seitenwangen (20) angeordnete schraubbare Befestigungselemente (23) miteinander verbunden.

2. Kraftfahrzeug nach Anspruch 1, **dadurch gekennzeichnet, daß** das mit dem Tragrahmen (12) verbundene Luftleitelement (13) zusammen mit der Rückseite des Kühlers (9) den nachgeschalteten zweiten Luftführungskanal (11) bildet.

3. Kraftfahrzeug nach einem der vorhergehenden Ansprüche, **dadurch gekennzeichnet, daß** das Oberteil (17) aus einem geeigneten Kunststoff wie PP GF30, PA 6.6 oder dergleichen gefertigt ist.

4. Kraftfahrzeug nach einem der vorhergehenden Ansprüche, **dadurch gekennzeichnet, daß** das Oberteil (17) aus einem Leichtmetalldruckguß hergestellt ist.

5. Kraftfahrzeug nach einem der vorhergehenden Ansprüche, **dadurch gekennzeichnet, daß** das Unterteil (18) des Tragrahmens (12) aus Stahlblech oder Aluminiumblech gefertigt ist.

6. Kraftfahrzeug nach einem der vorhergehenden Ansprüche, **dadurch gekennzeichnet, daß** durch die Anordnung von Zwischenstücken zwischen Oberteil (17) und Unterteil (18) Kühler (9) unterschiedlicher Bauhöhe im Tragrahmen (12) aufnehmbar sind.

## Claims

1. Automotive vehicle with at least one radiator (9), upstream of which a first air-guiding duct (10) with a cooling air inlet opening is mounted, and downstream of which a second air-guiding duct (11) with a cooling air discharge opening is connected, wherein the at least one radiator (9) is held by a supporting frame (12) fastened to the adjacent body (2), wherein an air-conducting element (13) which, together with the radiator (9), forms at least one of the two air-guiding ducts (10, 11) is formed integrally with the supporting frame (12), **characterized**
- **in that** the supporting frame (12) is composed of an upper part (17) in the shape of a frame and of a transversely extending lower part (18) profiled in the shape of a rail,
- **in that** the upper part (17) consists of an upper cross member (19) and two upright, downwardly protruding side cheeks (20),
- **in that** the air-conducting element (13) is formed integrally with the upper part (17) of the supporting frame (12) in such a manner that the transversely extending air-conducting element (13) is connected to both outer side cheeks (20) and to the rear edge of the upper cross member (19),
- **in that** fastening lugs (29, 30, 31) for the body-side holding of the supporting frame (12) on a transversely extending support (33) and on the adjacent boot recess (34) located there behind are formed on the upper part(17),
- **in that** the upper part (17) which is the shape of a frame is placed onto the lower part (18) of the supporting frame (12) and connected thereto by screwable fastening means (23) arranged in the lower region of the side cheeks (20).

2. Automotive vehicle according to Claim 1, **characterized in that** the air-conducting element (13) which is connected to the supporting frame (12) forms, together with the rear side of the radiator (9), the second air-guiding duct (11) connected downstream.

3. Automotive vehicle according to one of the preceding claims, **characterized in that** the upper part (17) is manufactured from a suitable plastic, such as PP GF30, PA 6.6 or the like.

4. Automotive vehicle according to one of the preceding claims, **characterized in that** the upper part (17) is produced from a light metal diecasting.

5. Automotive vehicle according to one of the preceding claims, **characterized in that** the lower part (18) of the supporting frame (12) is manufactured from steel sheet or aluminium sheet.

6. Automotive vehicle according to one of the preceding claims, **characterized in that** radiators (9) of differing overall height can be accommodated in the supporting frame (12) by the arrangement of intermediate pieces between the upper part (17) and lower part (18).

## Revendications

1. Véhicule automobile comprenant au moins un radiateur (9), en amont duquel est monté un premier conduit de guidage d'air (10) muni d'une ouverture d'entrée d'air de refroidissement et en aval duquel est monté un deuxième conduit de guidage d'air (11) muni d'une ouverture de sortie d'air de refroidissement, l'au moins un radiateur (9) étant reçu par un cadre porteur (12) fixé à la structure de caisse (2) adjacente, un élément de guidage d'air (13) étant réalisé d'une seule pièce avec le cadre porteur (12), cet élément de guidage d'air formant conjointement avec le radiateur (9) au moins l'un des deux conduits de guidage d'air (10, 11), **caractérisé en ce que**
- le cadre porteur (12) se compose d'une partie supérieure (17) en forme de cadre et d'une partie inférieure (18) s'étendant transversalement, profilée en forme de rail,
- la partie supérieure (17) se compose d'une traverse supérieure (19) et de deux parois latérales (20) verticales, s'étendant vers le bas,
- l'élément de guidage d'air (13) est réalisé d'une seule pièce avec la partie supérieure (17) du cadre porteur (12), de telle sorte que l'élément de guidage d'air (13) s'étendant transversalement soit raccordé aux deux parois latérales (20) situées à l'extérieur et au bord arrière de la traverse supérieure (19),
- des pattes de fixation (29, 30, 31) sont réalisées sur la partie supérieure (17) pour la fixation, du côté de la structure de caisse, du cadre de support (12) à un support (33) s'étendant transversalement et à la cavité de l'espace du coffre (34) située de manière adjacente derrière celui-ci,
- et la partie supérieure (17) en forme de cadre est posée sur la partie inférieure (18) du cadre de support (12) et ces deux parties sont assemblées l'une à l'autre par des éléments de fixation (23) vissables disposés dans la région inférieure des parois latérales (20).

2. Véhicule automobile selon la revendication 1, **caractérisé en ce que** l'élément de guidage d'air (13) connecté au cadre porteur (12) forme conjointement avec le côté arrière du radiateur (9) le deuxième conduit de guidage d'air (11) monté en aval.

3. Véhicule automobile selon l'une quelconque des revendications précédentes, **caractérisé en ce que** la partie supérieure (17) est fabriquée en un plastique approprié tel que du PP GF30, du PA 6.6 ou similaire.

4. Véhicule automobile selon l'une quelconque des revendications précédentes, **caractérisé en ce que** la partie supérieure (17) est fabriquée en un métal léger coulé sous pression.

5. Véhicule automobile selon l'une quelconque des revendications précédentes, **caractérisé en ce que** la partie inférieure (18) du cadre porteur (12) est fabriquée en tôle d'acier ou en tôle d'aluminium.

6. Véhicule automobile selon l'une quelconque des revendications précédentes, **caractérisé en ce que** des radiateurs (9) de différentes hauteurs de construction peuvent être reçus dans le cadre porteur (12) grâce à l'agencement de pièces intermédiaires entre la partie supérieure (17) et la partie inférieure (18).
